# FASCICULE DE BREVET EUROPEEN

(11) **EP 1 440 274 B1**
(45) Date de publication et mention de la délivrance du brevet: **09.08.2006**
(21) Numéro de dépôt: 02796809.8
(22) Date de dépôt: 18.10.2002
(51) Int. Cl.: F16M 11/20, F16M 11/00, B63B 35/73

(54) **PERFECTIONNEMENTS AUX DISPOSITIFS DE SUPPORT DE TIGES DE PARASOLS, ANTENNES OU AUTRES**
VERBESSERUNGEN AN VORRICHTUNGEN, DIE ZUR ABSTÜTZUNG VON STANGEN VON SONNENSCHIRMEN, ANTENNEN UND ANDEREN ELEMENTEN VERWENDET WERDEN
IMPROVEMENTS MADE TO DEVICES THAT ARE USED TO SUPPORT THE POLES OF PARASOLS, ANTENNAE AND OTHER ELEMENTS

(30) Priorité: 19.10.2001 FR 0113470
(43) Date de publication de la demande: 28.07.2004
(73) Titulaire: Colavecchi, César, 91310 Montlhery (FR)
(72) Inventeur: Colavecchi, César, 91310 Montlhery (FR)
(74) Mandataire: Thurgood, Alexander John
(86) Numéro de dépôt international: PCT/FR2002/003579
(87) Numéro de publication internationale: WO 2003/040610

(56) Documents cités:
- DE-A- 19 526 129
- FR-A- 2 376 356
- FR-A- 2 757 356
- US-A- 1 997 870
- US-A- 4 404 565
- US-B1- 6 234 434

## Description

La présente invention a pour objet des perfectionnements aux dispositifs de support de tiges de parasols ou autres et plus particulièrement des perfectionnements au brevet 97.07762 (2 757 356) déposé par le même demandeur le 23 juin 1997.

Dans ce brevet on a décrit un support de parasol comportant au moins trois pieds et qui comporte, à la fois, un lest central ayant tendance à provoquer un rapprochement desdits pieds et d'autre part des moyens s'opposant à ce rapprochement, ces deux efforts antagonistes procurant au support de parasol une excellente stabilité.

La présente invention concerne des perfectionnements à ce brevet 97,07762.

Le premier perfectionnement consiste à rendre réglable l'écartement des pieds;

Le deuxième perfectionnement consiste à réaliser lesdits pieds de façon qu'ils aient une bonne résistance aux efforts de flexion longitudinale, tout en ayant une relativement faible résistance à la torsion de façon à ne pas plier sous l'effet d'un coup de vent ; mais à pouvoir se tordre légèrement sur eux-mêmes ce qui permet d'amortir les effets d'un coup de vent.

Le troisième perfectionnement consiste à remplacer le lest central par un ancrage central réglable.

Le quatrième perfectionnement consiste à munir les extrémités de chaque pied d'une bouée flottante et à donner à l'attache du lest central une longueur et une densité telles qu'il soit immergé dans l'eau.

Le cinquième perfectionnement consiste à munir l'extrémité de chaque pied d'un prolongateur pivotant.

A titre d'exemples non limitatifs et pour favoriser la compréhension de l'invention, on a présenté aux dessins annexés :
- Figure 1, une vue de détail en perspective illustrant la fixation des pieds au manchon recevant la tige.
- Figure 2, une vue en élévation d'un détail de la figure 1 illustrant le moyen d'appui réglable d'un pied.
- Figure 3, une vue en perspective illustrant la structure d'un pied.
- Figure 4, une vue partielle du dessus de la figure 1.
- Figure 5, une vue d'une variante de réalisation.
- Figures 6 et 7, deux variantes de la figure 5.
- Figure 8, une vue illustrant une autre variante de la figure 7.
- Figure 9, une vue illustrant un autre mode de réalisation de l'invention.
- Figure 10, une vue illustrant une variante de réalisation des pieds du support.

Comme cela a été expliqué dans le brevet 97.07762, le dispositif de support d'une tige comporte à la fois des moyens pour rapprocher les pieds du support et des moyens pour s'opposer à un tel rapprochement.

Dans le brevet 97.07762 le moyen tendant à rapprocher les pieds est un lest constitué par un sac accroché auxdits pieds et les moyens s'opposant au rapprochement sont des biellettes.

L'inconvénient de cette disposition est que les biellettes ayant une longueur fixe l'écartement des pieds n'est pas réglable.

Le premier objet de la présente invention est de supprimer cet inconvénient.

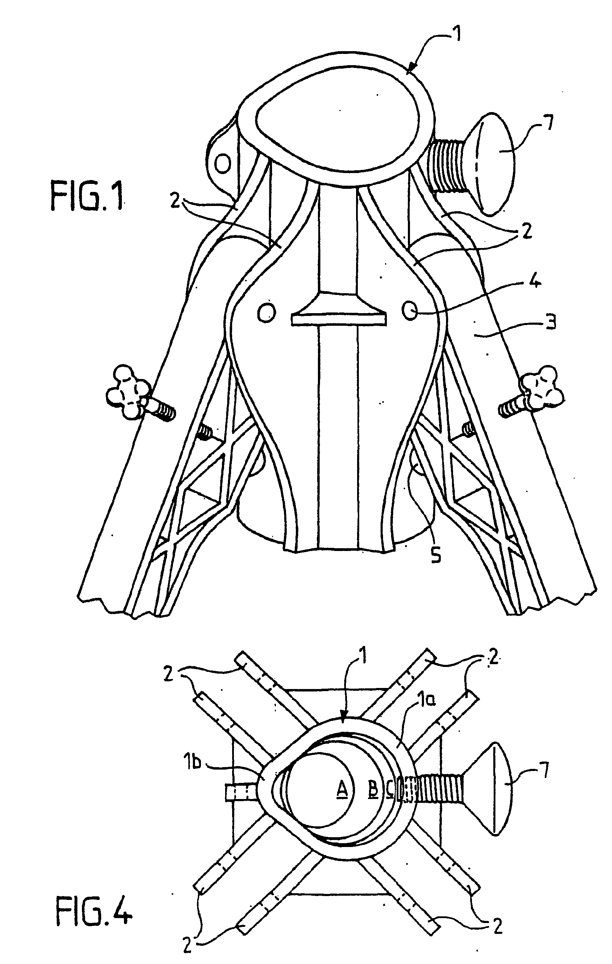

En se reportant aux figures 1 à 4, ont voit que le support est constitué d'un manchon 1 muni de quatre paires de brides 2 sur lesquels sont montés à pivotement quatre pieds 3 au moyen d'un axe 4.

Chaque pied 3 comporte une butée qui vient en appui contre le manchon et s'oppose ainsi au rapprochement des pieds.

Chaque butée 5 est réglable, c'est-à-dire qu'elle traverse le pied 3 par une tige filetée 5a et comporte une poignée 5b.

Ainsi, en vissant la tige filetée 5a on écarte le pied du manchon et inversement on le rapproche en dévissant : on peut donc régler l'écartement des pieds 3.

Chaque pied 3 est muni sur sa face intérieure d'une barrette 6 munie d'une pluralité de trous 6a, ce qui permet de suspendre le lest ou autre moyen analogue en plusieurs endroits.

Il est donc possible de régler à la fois l'écartement des pieds 3 au moyen des butées réglables 5 et le point d'application de la force tendant à rapprocher les pieds au moyen des orifices 6a.

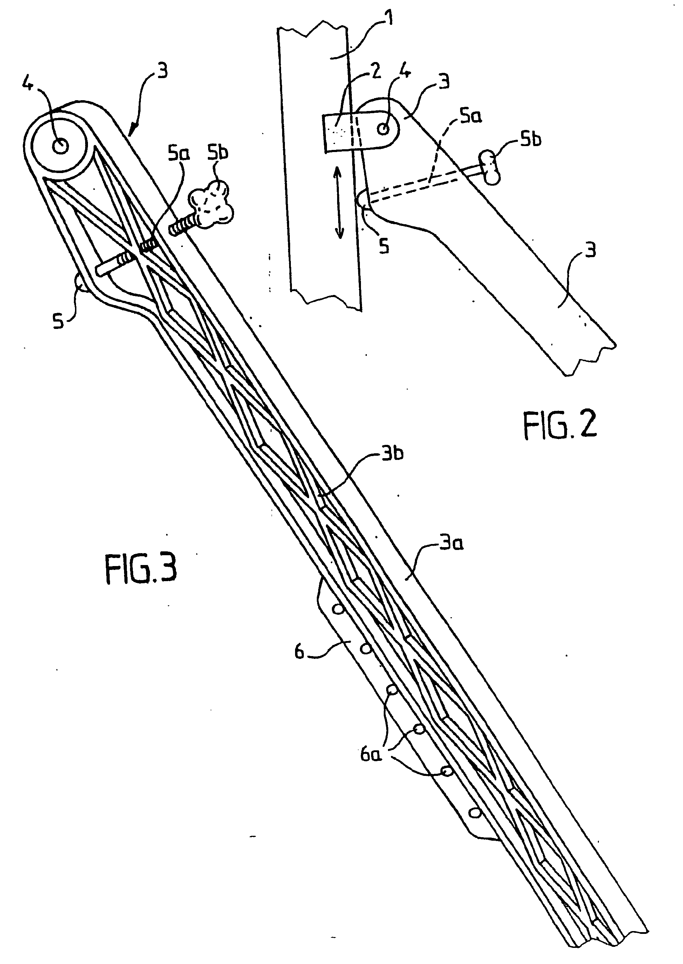

Comme cela est illustré à la figure 3, chaque pied 3 est constitué de deux lames plates 3a, reliées entre elles par un croisillonnage ou analogue 3b ayant une plus faible épaisseur.

Il en résulte que chaque pied 3 est très résistant aux efforts de flexion transversale mais beaucoup moins résistant aux efforts de torsion, ce qui permet au support de mieux résister aux coups de vent.

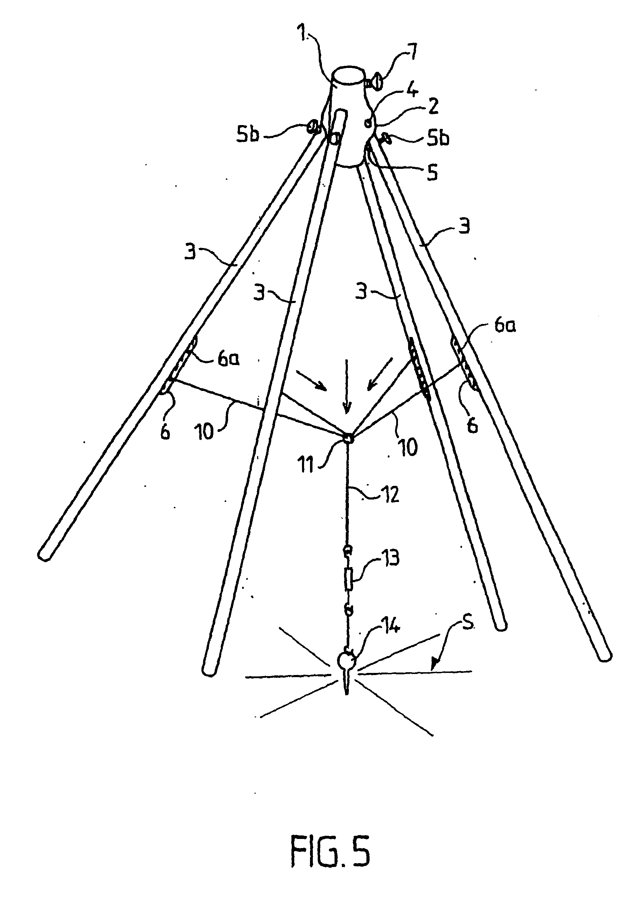

En se reportant à la figure 1, on voit que la section de l'orifice du manchon destiné à recevoir une tige n'est pas un cercle régulier mais en partie la (à droite sur la figure 4) un demi-cercle auquel est raccrochée une partie 1b de forme oblongue. Cette disposition permet de bloquer en position des tiges telles que A, B, C de diamètres différents, au moyen d'une vis de blocage 7, située à l'opposé de la forme oblongue 1b.

Il y a en effet lieu de noter que, aussi bien dans la description du brevet antérieur 97.07762 que dans celle-ci il est principalement fait mention de ce que le support est destiné à servir de support à un parasol ; mais l'invention n'est pas limitée à cet usage particulier : le support peut servir à supporter n'importe quelle tige telles que hampe de drapeau, mât de tente, tige d'antennes de télévision ou d'antennes paraboliques, tige portant un panneau de signalisation ou autres, cette énumération n'étant pas exhaustive.

Selon un autre aspect de la présente invention, le lest décrit au brevet 97.07762 peut être remplacé par un ancrage comme cela est représenté aux figures 5 à 8.

Sur ces figures, les mêmes éléments que ceux des figures 1 à 4 portent les mêmes références.

Sur la figure 5, on voit que le lest central a été remplacé par un ancrage constitué par un anneau 14 fixé dans le sol, un câble 12 et un tendeur 13 ; le câble 12 étant attaché à un anneau central 11 auquel aboutissent des câbles 10 fixés dans les orifices 6a des pieds 3.

On retrouve donc, mais sous une forme de réalisation différente, un moyen central qui a tendance à faire se rapprocher les pieds 3 et, à chaque pied 3, un moyen (en l'occurrence la butée réglable 5) qui s'oppose à ce rapprochement.

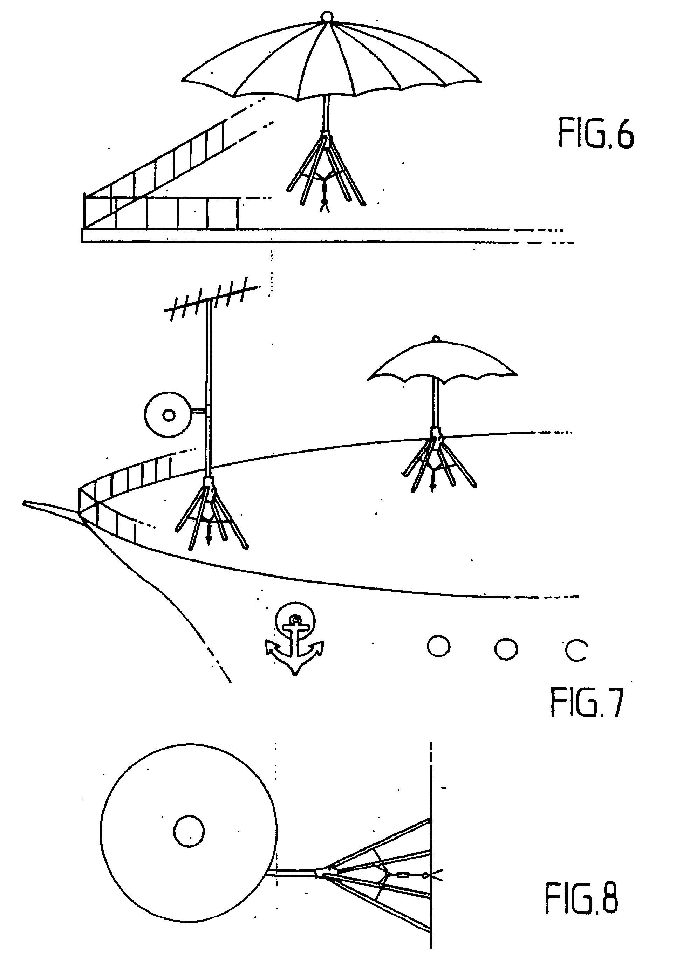

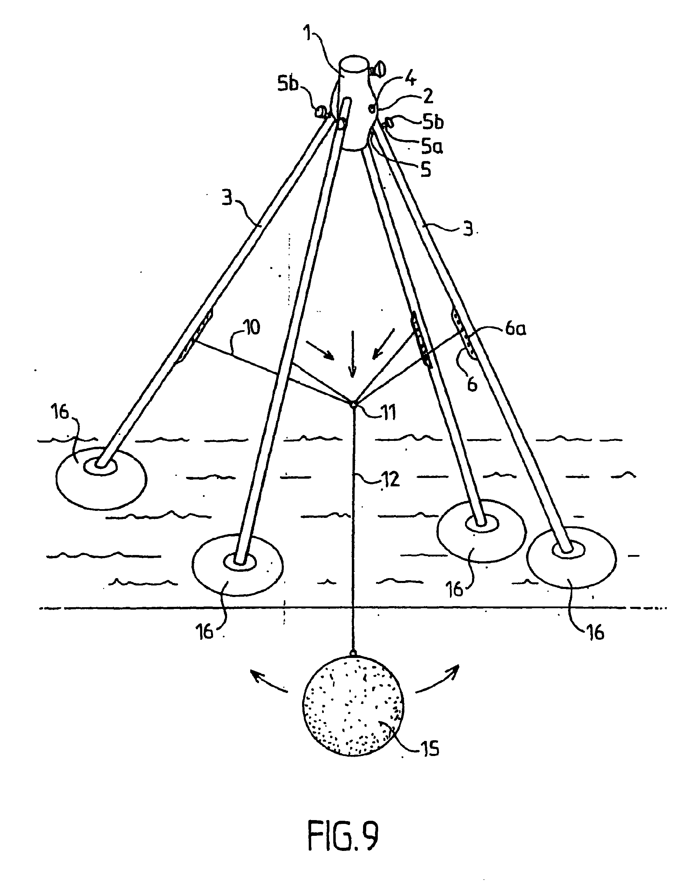

Cette disposition permet de nombreuses utilisations comme cela est illustré aux figures 6 à 8 : fixation d'un parasol sur un balcon (fig. 6) ou sur le pont d'un navire (fig. 7) ; fixation d'une antenne (fig. 7) ; fixation d'une antenne parabolique sur une paroi verticale (fig. 8).

On peut aussi, bien que cela ne soit pas représenté, utiliser un dispositif analogue à celui de la figure 8 pour fixer le support à un plafond, ce support portant un luminaire ou autres, tel par exemple qu'un motif décoratif. -

Cette même disposition permet d'ancrer le support au sol et d'y fixer une tige à laquelle est relié un élastique auquel est fixé une balle de tennis ou une balle de golf.

Dans le cas d'une balle de tennis, on peut régler la hauteur à laquelle l'utilisateur veut jouer en réglant d'une part la hauteur de la tige dans le manchon 1, et d'autre part l'écartement des pieds 3.

Dans le cas d'une balle de golf, on peut écarter les pieds 3 au maximum.

Sur la figure 9, on voit que selon une autre variante de réalisation on peut disposer des bouées flottantes 16 à l'extrémité des pieds 3 et attacher à l'anneau central 11 un câble 12 au bout duquel est suspendu une masse 15 d'une densité supérieure à celle de l'eau, analogue à un corps mort, ledit câble 12 ayant une longueur telle que la masse 15 soit immergée dans l'eau, cette masse 15 pouvant osciller comme un pendule par rapport aux pieds 3, lorsqu'il y a des vagues.

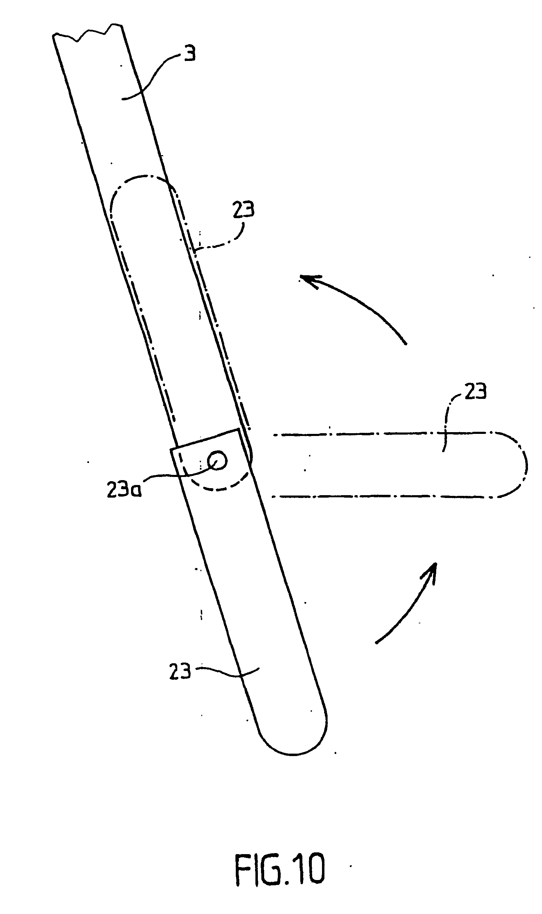

Selon une variante de réalisation illustrée de façon schématique à la figure 10, chaque jambe 3 peut comporter un prolongateur réglable 23, qui peut pivoter autour d'un axe 23a, muni d'un moyen de serrage. Par exemple l'axe 23a peut être une vis munie d'un écrou à papillon.

Cette disposition présente les avantages suivants :
- il est possible en dépliant complètement les prolongateurs 23 de modifier la hauteur du support ;
- il est possible, en bloquant les prolongateurs 23 en position horizontale d'augmenter l'empattement au sol du support ;
- il est possible en bloquant les prolongateurs 23 à des positions angulaires différentes de placer le support sur un terrain accidenté ou en pente tout en ayant l'axe du manchon 1 vertical.

Pour ranger le support, les pieds 3 sont repliés vers le haut. Il en est de même pour les prolongateurs 23.

## Revendications

1. Support de tige de parasol, d'antennes, de mât ou autres du type comportant au moins trois pieds qui sont soumis d'une part à une force centrale ayant tendance à provoquer le rapprochement desdits pieds et d'autre part des moyens s'opposant à ce rapprochement, les moyens ayant tendance à rapprocher les pieds sont soit un lest (15) soit un ancrage au sol (14), **caractérisé par le fait que** les moyens s'opposant au rapprochement sont constitués par des butées réglables (5) prenant appui contre un manchon (1) destiné à recevoir la tige et sur lequel sont articulés les pieds (3).

2. Support selon la revendication 1, dans lequel chaque pied (3) comporte, sur sa face interne, une pluralité d'orifices (6a) permettant l'accrochage du lest ou des moyens d'ancrage (10) à des niveaux différents.

3. Support selon la revendication 1 dans lequel chaque pied (3) est constitué de deux lames parallèles (3a) reliées entre elles par un croisillonnage de plus faible épaisseur de façon à avoir une bonne résistance à la flexion et une moindre résistance à la torsion.

4. Support selon la revendication 1, dans lequel le moyen d'ancrage est constitué par un anneau d'ancrage (14), fixé au sol, auquel est relié un câble (12) muni d'un tendeur (13), ce câble étant fixé à un anneau central (11) auquel aboutissent différents câbles (10) fixés aux orifices (6a) des pieds (3).

5. Support selon l'une quelconque des revendications 1 à 4, dans lequel chaque pied (3) est muni à son extrémité d'un prolongateur (23) articulé sur un axe (23a) et pouvant être immobilisé dans toute position angulaire voulue.

6. Support selon la revendication 1, dans lequel chaque pied (3) est muni d'une bouée flottante (16), l'ancrage (14) étant remplacé par une masse (15) d'une densité supérieure à celle de l'eau dans laquelle ladite masse (15) est immergée de façon à agir comme un stabilisateur pendulaire.

7. Support selon l'une quelconque des revendications 1 à 6, dans lequel la section de l'orifice du manchon destiné à recevoir une tige comporte une partie (1a) semi-circulaire et une partie (1b), opposée, de forme oblongue ; la partie semi-circulaire (1a) étant munie d'une vis de blocage (7).

8. Support selon la revendication 4 qui permet la fixation au sol de multiples objets tels que parasols, antennes de télévision, paraboles de réception de satellites, lampadaires, fils élastiques pour balles de tennis ou de golf ; la fixation de multiples objets sur des parois verticales ou au-dessous de parois horizontales telles que des plafonds.

## Claims

1. A supporting pole of a parasol, antennae, mast or the like comprising at least three support legs which are subjected to a central force on the one hand, that tends to cause an approach of the said supporting legs and on the other hand, means for opposing this approach, by means of which the legs move closer together, are either a ballast (15) or an anchoring to a floor (14), wherein the means which are used to oppose the approach comprise adjustable ends (5) which rest on a sleeve tube (1) intended to receive the pole and on which the support legs (3) are articulated.

2. The support according to claim 1, wherein each support leg (3) carries, on its internal face, a number of orifices (6a) that permit suspension of the ballast or means of anchoring (10) at different levels.

3. The support according to claim 1, wherein each support leg (3) consists of two parallel plates (3a), connected to one another by a bracing of a smaller thickness so as to have good resistance to flexion and less resistance to torsion.

4. The support according to claim 1, wherein the means of anchoring consist of an anchor ring (14) attached to the floor, to which a cable (12) is connected, equipped with a spanner (13), the cable being attached to a central ring (11) where different cables (10) attached to the orifices (6a) of the suport legs (3) end.

5. The support according to any of claims 1 to 4, wherein each support leg (3) is equipped at its end with an extension piece (23) articulated on an axis (23a) and which can be immobilized in any desired angular position.

6. The support according to claim 1, wherein each support leg (3) is equipped with a floating buoy (16), the anchoring (14) being replaced by a mass (15) having a density greater than that of water, into which the said mass (15) is immersed so as to act as a pendular stabilizer.

7. The support according to any of claims 1 to 6, wherein the cross-section of the orifice of the sleeve tube that is intended to receive a pole has a semi-circular part (1a) and a part (1b), opposite, of an oblong form ; the semi-circular part (1a) being equipped with a locking screw (7).

8. The support according to claim 4 permits attaching multiple objects to the floor such as parasols, television antennae, satellite reception parabolas, lamp posts, elastic bands for tennis balls or golf balls ; attaching multiple objects to vertical walls or below horizontal walls such as ceilings.

## Patentansprüche

1. Aufnahmevorrichtung für den Stiel eines Sonnenschirms, eines Antennenstabs, eines Mastes oder ähnlichem, mit zumindest drei Füssen, die einerseits einer Zentralkraft ausgesetzt sind, die die Tendenz hervorruft, dass sich die schon erwähnten Füße einander nähern und andererseits in der Lage ist, gegen dieses Zusammenziehen der Füße entgegen zu gehen, die Mittel, die die Tendenzwirkung haben, dass sich die Füße einander nähern, sind entweder ein Ballast (15) oder eine Verankerung im Boden (14), **dadurch gekennzeichnet, dass** die Vorrichtung, die der Annäherung entgegenwirken mit einstellbaren Anschlägen (5) versehen sind, die an die Muffe (1) anstoßen, die dafür bestimmt ist, den Stiel aufzunehmen und an dem die Füße (3) ausschwenkbar angebracht sind.

2. Vorrichtung gemäß der Forderung 1, bei der jeder Fuß (3) auf der Innenseite eine Vielzahl von Öffnungen (6a) aufweist, die die Befestigung des Ballast oder die der Befestigungsmittel (10) in verschiedenen Höhen ermöglichen.

3. Vorrichtung gemäß der Forderung 1, bei der jeder Fuß (3) aus zwei zueinander parallel verlaufenden Lamellen (3a) besteht, die miteinander durch Verstrebungen geringerer Dicke verbunden sind und zwar in der Weise, daß sie eine gute Biegefestigkeit und eine geringere Drehfestigkeit haben.

4. Vorrichtung gemäß der Forderung 1, bei der die Befestigungsmöglichkeit aus einem Befestigungsring (14) besteht, der im Boden verankert ist, an den ein Kabel (12) angebracht ist, das mit einer Spannungsvorrichtung (13) ausgestattet ist, dieses Kabel ist an einem zentralen Ring (11) befestigt, auf den verschiedene andere Kabel (10) treffen, und in den Öffnungen (6a) der Füße (3) befestigt sind.

5. Vorrichtung gemäß einer der Forderungen 1 bis 4, bei der jeder Fuß (3) an seinem Ende mit einem Verlängerungsstück (23) versehen ist, das ausschwenkbar um eine Achse (23a) angebracht ist und in jeder gewünschten Winkelposition arretiert werden kann.

6. Vorrichtung gemäß der Forderung 1, bei der jeder Fuß (3) mit einem Schwimmreifen (16) ausgestattet ist, die Verankerung (14) durch ein Gewicht (15) mit einer höheren Dichte als die des Wassers ersetzt wird, in dem das schon erwähnte Gewicht (15) sich unter der Wasseroberfläche befindet, so daß sie wie ein aufgehängter Stabilisator wirkt.

7. Vorrichtung gemäß einer der Forderungen 1 bis 6, bei der der Öffnungsdurchmesser der Muffe, die für die Aufnahme des Stiels bestimmt ist, aus einer halbkreisförmigen Seite (1a) und einer Seite (1b) besteht, die ihr gegenüber liegt und länglicher Form ist; die halbkreisförmige Seite (1a) ist mit einer Klemmschraube (7) ausgestattet.

8. Vorrichtung gemäß der Forderung 4, die die Befestigung zahlreicher Gegenstände am Boden ermöglicht wie Sonnenschirme, Fernsehantennen, Parabolantennen für den Satellitenempfang, Straßenlanternen, Gummibänder für Tennis- oder Golfbälle; die Befestigung zahlreicher Gegenstände an vertikalen Wänden oder unter horizontalen Abdeckungen wie Decken.
